Europäisches Patentamt

European Patent Office

Office européen des brevets

(19)

(11) EP 0 781 728 A1

(12) **DEMANDE DE BREVET EUROPEEN**

(43) Date de publication:
02.07.1997 Bulletin 1997/27

(51) Int Cl.⁶: **C02F 1/32**, C02F 1/78,
C02F 1/72

(21) Numéro de dépôt: 96402907.8

(22) Date de dépôt: 26.12.1996

(84) Etats contractants désignés:
BE CH DE ES GB LI SE

(30) Priorité: 27.12.1995 FR 9515581

(71) Demandeur: FRAMATOME
92400 Courbevoie (FR)

(72) Inventeurs:
• Guillermier, Pierre
69007 Lyon (FR)

• Texier, Christophe
01150 Chazey Sur Ain (FR)
• Organista, Manuel
71200 Le Creusot (FR)

(74) Mandataire: Bernasconi, Jean et al
c/o Cabinet Lavoix,
2, Place d'Estienne d'Orves
75441 Paris Cédex (FR)

(54) **Procédé et dispositif de traitement d'un effluent aqueux comprenant une charge organique**

(57) Pour traiter selon l'invention un effluent acide aqueux issu de la décontamination d'un composant d'une centrale nucléaire, ledit effluent renfermant une charge organique comprenant un réducteur organique ainsi que des ions nitrates,
on introduit dans ledit effluent au moins un composé oxydant choisi parmi l'ozone et le peroxyde d'hydrogène, on soumet l'effluent dans lequel le composé oxydant a été introduit à un rayonnement ultraviolet et on convertit ainsi la totalité de la charge organique en eau et en dioxyde de carbone, ainsi qu'éventuellement en au moins un oxyde d'un élément chimique présent dans la charge organique tout en neutralisant ledit effluent.

EP 0 781 728 A1

## Description

La présente invention concerne un procédé de traitement d'effluents aqueux contenant des réactifs organiques issus de procédés de décontamination de composants de centrale nucléaire ou des sous-produits organiques de tels procédés.

Dans les centrales nucléaires, le(s) circuit(s) de circulation d'eau destinée à extraire la chaleur de réaction du coeur du réacteur, qui sont constitués d'alliages métalliques, sont sujets à la corrosion par l'eau au cours de leur fonctionnement. La contamination des circuits se produit lorsque les oxydes formés par corrosion des surfaces métalliques des circuits sont entraînés jusqu'au coeur par l'eau de circulation, s'y activent puis se redéposent sur les surfaces métalliques en contact avec l'eau de circulation.

Dans une centrale de type PWR, le circuit primaire (cuve et équipements internes du réacteur, générateur de vapeur, pompes) est contaminé directement par ses propres oxydes. Dans le circuit secondaire, du fait de la corrosion et de l'érosion par l'eau des surfaces de l'ensemble de ce circuit, des quantités importantes d'oxydes viennent s'accumuler particulièrement dans certains composants de la centrale nucléaire. Dans une centrale de type BWR, tous les circuits sont susceptibles d'être contaminés.

Pour déplacer les produits de corrosion, activés ou non, généralement constitués d'oxyde de fer, de chrome et de nickel, on réalise notamment des opérations de décontamination en appliquant sur lesdites surfaces métalliques des compositions aptes à dissoudre les oxydes et à déplacer la radioactivité potentielle de ces surfaces. La plus grande partie des oxydes et de la radioactivité des circuits peut ainsi être transférée vers des sites de stockage des déchets.

Les procédés de décontamination comprennent généralement trois types d'opérations élémentaires :

- oxydation au moyen d'une composition à base d'oxydants minéraux (par exemple permanganate de potassium en milieu acide ou basique) pour oxyder le chrome présent dans les dépôts constitués d'oxyde de fer, nickel et chrome afin de rendre soluble ce dernier élément dans son état de valence + VI;
- réduction au moyen d'une composition comprenant des réducteurs organiques permettant de réduire les oxydes de fer et de nickel et de solubiliser ces éléments, la composition comprenant éventuellement des complexants ;
- rinçages intermédiaires et finaux permettant d'éliminer des surfaces traitées les produits ou réactifs résiduels liés aux opérations précédentes.

Ces effluents généralement dilués contiennent donc une charge minérale constituée par les métaux dissous, des acides ou bases résiduels et les oxydants minéraux résiduels, et une charge organique constituée par les réducteurs organiques résiduels ainsi que leurs sous-produits de réaction. Ils doivent être traités pour séparer, sous une forme stockable, les matières actives portées par la charge minérale puis la charge minérale résiduelle et la charge organique doivent également être traitées et/ou éliminées avant rejet vers les circuits de traitement des effluents de la centrale puis rejet des effluents conformément aux normes de rejet pour la protection de l'environnement.

La séparation de la majeure partie de l'activité se fait généralement sur des résines échangeuses d'ions, pendant le procédé de décontamination ou bien après récupération de l'effluent, au cours d'une opération de traitement dudit effluent. Ces systèmes produisent un volume important de résidus (résine chargée d'éléments métalliques activés) qui devront alors être traités à leur tour en vue de leur stockage.

Les effluents faiblement actifs, le cas échéant après passage sur résine échangeuse d'ions, peuvent être traités de diverses manières.

On peut utiliser des techniques d'incinération ou de vitrification de l'effluent, qui produisent cependant des résidus qui devront être stockés ou retraités.

L'effluent peut également être passé sur un évaporateur afin de diminuer le volume de l'effluent, si la centrale en possède un. Toutefois, la présence de résidus minéraux, en particulier de composés à base de métaux, et/ou organiques dans l'effluent entraîne des problèmes prononcés de maintenance de l'évaporateur.

Lorsque la centrale ne dispose pas d'un évaporateur, l'effluent doit être rejeté sous forme liquide et la charge organique est traitée avec un oxydant puissant pour diminuer la demande chimique en oxygène (DCO) de l'effluent avant son rejet. Jusqu'à présent, les seuls oxydants connus pour effectuer ce traitement avec de bons rendements sont de type minéral (par exemple, persulfate de sodium), et le traitement apporte une quantité importante de sous-produits minéraux. Une phase finale est nécessaire pour séparer ces sous-produits par passage sur résine échangeuse d'ions. Cette phase finale présente l'inconvénient d'utiliser une quantité importante de résine produisant des volumes importants de déchets.

De manière générale, il est préférable de mettre en oeuvre des procédés de traitement ne conduisant pas à la formation de sous-produits générants d'autres opérations de traitement.

De fait, les procédés de traitement d'effluents connus ont des inconvénients importants et il persiste un besoin pressant pour un procédé de traitement où la quantité de sous-produits indésirables, notamment des sous-produits minéraux, restant dans l'effluent serait minimale, permettant de réduire au minimum la quantité de résine échangeuse d'ions nécessaire et d'éviter la présence de produits organiques dans les concentrats de l'évaporateur.

L'invention a donc pour but de répondre à ce besoin en fournissant un procédé pour le traitement des effluents de décontamination dans lequel la charge organique est totalement éliminée. En particulier, le but de l'invention est de réaliser la dégradation ultime de la charge organique en des produits de dégradation pouvant être rejetés dans le respect des normes de rejet.

A cet effet, l'invention a pour objet un procédé de traitement d'un effluent aqueux acide issu de la décontamination d'un composant d'une centrale nucléaire, ledit effluent renfermant une charge organique comprenant un réducteur organique en présence d'ions nitrates, caractérisé en ce qu'on introduit dans ledit effluent au moins un composé oxydant choisi parmi l'ozone et le peroxyde d'hydrogène, qu'on soumet l'effluent dans lequel le composé oxydant a été introduit à un rayonnement ultraviolet et qu'on convertit ainsi la totalité de la charge organique en eau et en dioxyde de carbone, ainsi qu'éventuellement en au moins un oxyde d'un élément chimique présent dans la charge organique tout en neutralisant ledit effluent.

L'ozone et l'eau oxygénée sont des oxydants connus. Toutefois, ils se sont révélés inefficaces pour le traitement des effluents de décontamination ne conduisant qu'à une dégradation partielle de la charge organique sans diminution de la teneur en carbone organique total.

L'invention repose sur le fait que, de manière inattendue, on parvient à une dégradation complète de la charge organique réduisant à des valeurs infimes à la fois la demande chimique en oxygène (DCO) et la teneur en carbone organique total (COT), en combinant l'action de rayons ultra-violets à ces oxydants.

Cette action combinée était connue dans d'autres domaines, mais les inventeurs ont montré que de manière inattendue, on pouvait mettre en oeuvre une telle combinaison u.v./oxydant(s) dans le cas d'effluents de décontamination de composants de centrale nucléaire qui présentent la particularité d'être acides (pH souvent inférieur à 2) et de contenir des ions nitrates, ce qui est défavorables à l'application de ce type de technique.

En effet, il est connu que les milieux acides sont très défavorables à la formation de radicaux OH$^\bullet$ et que les ions nitrates sont susceptibles d'absorber les rayonnements u.v. et de faire ainsi écran à leur pénétration dans la solution.

L'invention a également pour objet un dispositif permettant la mise en oeuvre d'un procédé de traitement tel qu'il vient d'être décrit. Ce dispositif comprend une boucle de circulation et est caractérisé en ce qu'il comprend un bac de stockage d'effluents auquel sont éventuellement associés des moyens de mélange, des moyens de circulation de l'effluent dans ladite boucle, des moyens d'injection d'un réactif liquide ou gazeux dans ladite boucle alimentés en peroxyde d'hydrogène ou en ozone, et au moins une source de rayonnement ultraviolet devant laquelle circule l'effluent.

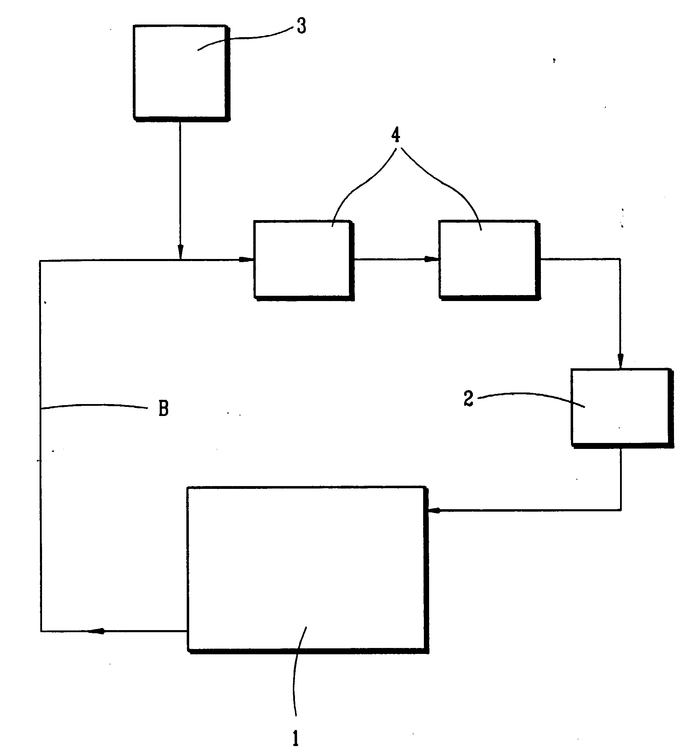

Les avantages de l'invention apparaitront clairement de la description détaillée qui va suivre, faite en regard de la figure unique qui est une représentation schématique d'un dispositif selon l'invention.

La présente invention concerne un procédé de traitement d'un effluent aqueux issu de la décontamination de composants d'une centrale nucléaire, contenant une charge organique, qui doit être transformée sous une forme acceptable pour l'environnement.

Des réactifs organiques utilisés dans des procédés de décontamination sont essentiellement des réducteurs organiques en particulier des acides organiques réducteurs.

Les réducteurs organiques sont destinés à solubiliser certains dépôts par réduction des éléments métalliques qui les constituent. La réaction de ces composés organiques avec les éléments métalliques traités peut entraîner la présence dans l'effluent réducteur de produits organiques d'oxydation correspondants. L'effluent résultant de cette opération comprend essentiellement lesdits éléments métalliques réduits, du réducteur organique sous une ou plusieurs formes oxydées, et du réducteur en excès.

Selon les procédés usuels de décontamination, on met en oeuvre dans un premier temps une solution oxydante, productrice d'un effluent "oxydant", puis dans un deuxième temps, une solution réductrice, productrice d'un effluent "réducteur". Une partie du réducteur en excès ou des éventuels sous-produits organiques peut être détruite par oxydation en mélangeant l'effluent oxydant avec l'effluent réducteur. On utilise le plus souvent comme réducteur organique, un acide réducteur tel que l'acide ascorbique ou l'acide oxalique, ou bien des sucres présentant des liaisons aldéhyde.

Le procédé de l'invention s'applique en particulier à des effluents acides.

La présente invention résout le problème de la dégradation de la charge organique contenue dans de tels effluents, en mettant en oeuvre une réaction d'oxydation qui ne produit aucun autre résidu que de l'eau, du dioxyde de carbone et éventuellement des oxydes des autres éléments chimiques présents dans la charge organique.

Les oxydants utilisables selon l'invention sont l'ozone et le peroxyde d'hydrogène, qui peuvent être employés seuls ou en combinaison. Il est apparu de manière inattendue que la dégradation de la charge organique issue d'un procédé de décontamination pouvait être réalisée de façon complète par ces oxydants dans le milieu de l'effluent, soumis à l'action d'un rayonnement ultra-violet.

On suppose que ces conditions permettent la formation de radicaux OH$^\bullet$ hautement réactifs qui agissent sur les composés organiques réducteurs par simplification pas à pas du squelette de la molécule organique ; le schéma de la dégradation d'une molécule hydrocarbonée M(n) comportant n atomes de carbone serait le suivant :

$$M(n) + OH^\bullet \rightarrow M(n-1) + CO_2 + (H_2O)$$

$$M(n-1) + OH^\bullet \rightarrow M(n-2)\ CO_2 + (H_2O)$$

...

$$M(p) + OH^\bullet \rightarrow pCO_2 + H_2O$$

L'action du radical $OH^\bullet$ sur les composés organiques est immédiate car sa durée de vie est courte dans le milieu traité, et aboutit à la dégradation ultime de la molécules organique en $CO_2$ et $H_2O$, et éventuellement en oxydes des autres éléments chimiques présents dans ladite molécule.

L'eau produite s'ajoute au solvant aqueux de l'effluent. Le $CO_2$ se dégage hors de l'effluent ou se dissout partiellement dans ce dernier au cours du traitement. De même, les éventuels oxydes des autres éléments, notamment azote, de la charge organique traitée peuvent soit se dégager sous forme gazeuse hors de l'effluent ou bien se dissoudre partiellement dans ce dernier sous forme d'anions.

De manière générale, l'oxydant est ajouté à l'effluent en quantité telle qu'il est capable de produire un excès de radicaux hydroxyles par rapport à la charge organique initiale exprimée par la teneur en carbone organique totale (COT). Avantageusement, cet excès sera de l'ordre de 2 à 10 équivalents de $OH^\bullet$ par atome de carbone dans ladite charge organique.

Toutefois, cette gamme n'est pas limitative et le spécialiste pourra aisément adapter la quantité d'oxydant ajoutée en fonction de l'avancement de la réaction, suivi par la mesure de la COT.

Lorsque l'oxydant choisi est le peroxyde d'hydrogène, on l'utilise avantageusement à raison de 0,4 à 3 g de $H_2O_2$, en particulier de 0,6 à 2 g de $H_2O_2$ par gramme de charge organique initiale.

Lorsque l'oxydant choisi est l'ozone, cette dernière est mise en présence de l'effluent en phase gazeuse. Il faut donc tenir compte du transfert de l'ozone de la phase gazeuse à la phase liquide à traiter pour déterminer la quantité d'oxydant à mettre en oeuvre. Selon les conditions réactionnelles, cette quantité pourra être avantageusement choisie de 10 à 200 g d'ozone par gramme de charge organique initiale.

Les bornes supérieures proposées ci-dessus n'ont qu'une valeur indicative: la quantité d'oxydant peut être choisie au-delà de ces bornes pour accélérer la cinétique de la dégradation. Des quantités excessives d'ozone seront toutefois à éviter pour des raisons d'ordre économique.

Les quantités de peroxyde d'hydrogène et d'ozone utilisées seront adaptées au cas par cas en fonction de la quantité de charge organique à traiter et de la nature de cette dernière.

Le rayonnement ultra-violet utile selon l'invention peut être fourni avantageusement à partir de lampes UV ou à partir de faisceaux laser excimères. De préférence, la gamme de longueur d'onde de ce rayonnement est de 200 à 600 nm, avec avantageusement une intensité maximum à 375 nm comme par exemple le rayonnement d'une lampe à moyenne pression de vapeur de mercure dopée. La puissance du rayonnement appliquée à l'effluent peut varier en fonction de la nature de ce dernier, de l'oxydant choisi, et des conditions pratiques de mise en oeuvre du traitement.

De manière générale, la puissance utilisée peut être de 10 à 5 000 W/g de charge organique traitée, de préférence inférieure à 1 000 W/g.

De manière avantageuse, une puissance de l'ordre de 10 à 500 W/g, de préférence de 50 à 200 W/g de charge organique peut être suffisante pour atteindre une dégradation totale de la charge organique.

Grâce au procédé de l'invention, cette dégradation totale peut être obtenue très rapidement en soumettant l'effluent au rayonnement UV pendant une durée inférieure à 24 heures, notamment d'environ 3 à 12 heures.

De préférence, l'effluent est soumis au traitement à une température de l'ordre de 30 à 60°C. Toutefois, l'effluent s'échauffe au cours du traitement suite à son passage devant les sources de rayonnement UV; par ailleurs, les réactions d'oxydation ayant lieu au cours du traitement ont un caractère exothermique prononcé contribuant à l'échauffement de l'effluent. Ainsi, le procédé de traitement selon l'invention peut être avantageusement mise en oeuvre sur un effluent dont la température initiale est de 15 à 60°C, notamment de 20 à 35°C.

Il est apparu que le pH de l'effluent augmentait au cours du traitement. De préférence, le pH de l'effluent peut être maintenu inférieur à 6,3, valeur du pKa du couple $CO_2/H_2CO_3$, de sorte que le $CO_2$ produit s'échappe de la solution. Lorsque le pH au cours du traitement égale ou dépasse 6,3, le $CO_2$ produit se trouve en équilibre dans la solution sous forme de carbonate, augmentant la teneur en carbone inorganique total de l'effluent. Ainsi, il est préférable de limiter la teneur globale en carbone, qu'il soit de nature organique ou inorganique dans l'effluent, en contrôlant le pH de l'effluent au cours du traitement. Celui-ci peut toutefois atteindre des valeurs assez proches de cette limite et varier par exemple entre 5 et 6-6,2 à la fin du traitement.

De même, lorsque d'autres oxydes que $CO_2$ et $H_2O$ sont susceptibles de se former, on pourra réguler le pH de l'effluent au cours du traitement de façon à ce qu'ils se dégagent préférentiellement sous forme gazeuse hors de l'effluent ou bien subsistent sous forme dissoute dans l'effluent.

Dans les conditions générales exposées ci-dessus, on obtient de très bons résultats pour la dégradation de la charge organique, en matière de diminution de la demande chimique en oxygène (DCO) et de la teneur en carbone organique total (COT), que l'oxydant choisi soit de l'ozone ou le peroxyde d'hydrogène.

Les réactifs oxydants ozone et peroxyde d'hydrogène peuvent être utilisés seuls ou en combinaison. On a pu mettre en évidence que l'utilisation du peroxyde d'hydrogène était très avantageuse, pour obtenir des rendements de dégradation quantitatifs en un temps très court, un peu plus avantageux que l'utilisation de l'ozone. L'utilisation combinée de peroxyde d'hydrogène et d'ozone permet d'obtenir des résultats encore meilleurs en matière de rendement de dégradation et de temps de traitement. Les réactifs de traitement peuvent donc être classés comme suit par ordre croissant d'efficacité pour l'abattement de la DCO : $UV/O_3$, $UV/H_2O_2$, $UV/H_2O_2/O_3$.

L'utilisation du peroxyde d'hydrogène seul présente l'avantage d'un coût relativement faible : en effet, le peroxyde d'hydrogène est utilisable sous forme de solution aqueuse, typiquement de 30 à 70 % de $H_2O_2$ en poids, et le procédé de traitement peut être mis en oeuvre dans un appareillage simple prévu pour le mélange de réactifs liquides. Par contre, l'ozone est un réactif gazeux qui est classiquement fabriqué in-situ, à partir d'oxygène, en utilisant une énergie d'environ 60 W par gramme d'ozone. Cela nécessite l'utilisation d'un dispositif de production d'ozone et d'un appareillage permettant le transfert de matières gazeuse à la phase liquide de l'effluent à traiter. Ce réactif s'avère toutefois très avantageux dans la mesure où il permet d'améliorer les performances du peroxyde d'hydrogène, en réduisant le temps nécessaire à l'obtention d'une dégradation totale.

Le procédé de traitement de l'invention s'intègre facilement comme étape finale ou intermédiaire d'un procédé de traitement d'effluents de décontamination d'un composant d'une centrale nucléaire, à savoir un effluent d'attaque oxydante, un effluent d'attaque réductrice et un effluent de rinçage. Chaque type d'effluent peut être traité de manière séparée pour en éliminer la charge organique et la charge minérale.

Les effluents contenant un agent organique réducteur ou un sous-produit oxydé d'un tel agent, après avoir été traités séparément suivant un procédé selon l'invention, peuvent être réunis pour être rejetés, ou bien lorsque cela n'a pas été effectué auparavant, pour subir une opération de déminéralisation.

En variante, ces effluents peuvent être réunis avant de subir le traitement destiné à éliminer la charge organique selon l'invention. Trois cas de figures sont alors possibles:

- traitement d'un mélange des solutions oxydante et réductrice (et de solution de rinçage éventuellement) :

La réaction d'oxydo-réduction lors du mélange des effluents dégrade la charge organique de l'effluent réducteur et il reste dans le mélange un excès de réactif oxydant en présence de ses sous-produits minéraux.

Pour être exploitable, la solution devant être translucide et avoir un pH acide, et être évacuée par le circuit de traitement des effluents de la centrale, un ajout de réactif réducteur voire d'acide doit être alors réalisé.

Le mélange peut alors être traité suivant un procédé de l'invention pour éliminer totalement cette charge organique.

- traitement de la solution oxydante seule (ou mélangée à la solution de rinçage) :

De même que précédemment, pour que la solution soit exploitable et puisse être évacuée par le circuit de traitement des effluents de la centrale, un ajout de réactif réducteur voire d'acide doit être alors réalisé afin de passer en milieu réducteur.

Le mélange peut alors être traité suivant un procédé de l'invention pour éliminer totalement cette charge organique.

- traitement des solutions réductrice ou de rinçage, seules ou mélangées.

L'invention prend un intérêt tout particulier dans ce cas précis (surtout pour les centrales BWR où il existe essentiellement ce type d'effluent après une opération de décontamination). L'invention ne nécessite pas d'apport d'oxydants forts, générant une forte charge minérale, ni la nécessité d'un traitement sur évaporateur afin de casser la charge organique, et présente un fort avantage.

Le dispositif suivant l'invention est adapté à tous les cas de figure énoncés ci-dessus.

La figure unique représente schématiquement un tel dispositif constitué d'une boucle de circulation B comprenant un bac 1 de stockage d'effluent, des moyens 2 de circulation de l'effluent dans ladite boucle, des moyens 3 d'injection d'un réactif liquide ou gazeux dans ladite boucle alimentés en peroxyde d'hydrogène ou en ozone et au moins une source 4 de rayonnement UV devant laquelle circule l'effluent.

Le bac 1 peut être équipé de moyens de mélange lorsque plusieurs effluents différents sont mélangés avant le traitement selon l'invention. Tout type de bac mélangeur connu en soi peut convenir.

Les moyens 2 de circulation de l'effluent sont avantageusement constitués d'une pompe pouvant être de tout type connu.

Les moyens 3 d'injection de réactif sont de préférence disposés dans la boucle en aval du bac 1 et en amont de la source 4 de rayonnement UV.

Selon une variante de l'invention, le dispositif peut comprendre à la fois des moyens d'injection d'un réactif liquide alimentés en peroxyde d'hydrogène et des moyens d'injection d'un réactif gazeux alimentés en ozone, éventuellement fabriquée in situ dans un appareillage connu en soi.

La source 4 de rayonnement UV peut être une lampe ou un faisceau laser excimère.

De manière avantageuse, le dispositif selon l'invention comprend en outre au moins une chambre réactionnelle sur laquelle est disposée la source de rayonnement UV.

Ce dispositif peut être utilisé pour réaliser le traitement d'un effluent :

- en continu, avec une circulation permanente de l'effluent et une injection en continu d'un réactif liquide ou gazeux ;
- en discontinu, avec une étape d'alimentation de la boucle de circulation en effluent, une étape d'injection de réactif liquide ou gazeux, une étape de traitement pendant laquelle l'effluent est maintenu devant la source de rayonnement UV et pendant laquelle le bac de stockage est réalimenté d'un nouveau lot d'effluent, et une étape de vidange de l'effluent traité et de réalimentation de la boucle d'effluent; ou
- en semi-continu, suivant la séquence précédente dans laquelle l'étape de vidange est supprimée et la boucle est réalimentée avec l'effluent qui vient de subir le traitement.

Le dispositif selon l'invention peut comprendre de façon classique des moyens de dosage de la DCO et de la COT de l'effluent, auxquels sont éventuellement asservis les moyens d'injection de réactif liquide ou gazeux.

Lorsque le réactif utilisé est l'ozone, le dispositif peut également comprendre des moyens classiques de contrôle de la pression. Il peut également comprendre des moyens de circulation de l'ozone à co- ou contre-courant de l'effluent à traiter.

Les exemples suivants illustrent l'invention. Dans ce qui suit, toutes les teneurs en ppm sont exprimées en parties en poids.

**EXEMPLE 1 :** Traitement des effluents des étapes d'attaque oxydante et d'attaque réductrice d'un procédé de décontamination.

Une solution de composition typique d'un effluent d'attaque oxydante de décontamination a la composition suivante avant traitement:

Eau déminéralisée
$KMnO_4$ : 1 250 ppm
$HNO_3$ : 1 120 ppm
pH = 1,7-1,8
à 25°C

Une solution typique d'un effluent d'attaque réductrice de décontamination, qui a subi une opération de déminéralisation partielle afin de retenir l'activité par passage sur résine échangeuse d'ions cationique forte sous forme $H^+$, a la composition suivante avant traitement:

Eau déminéralisée
acide ascorbique $C_6H_8O_6$ : 1 350 ppm
$HNO_3$ : 1 000 ppm
pH : 1,75-1,85
à 25°C

La demande chimique en oxygène de cette phase réductrice (dont une des méthodes de détermination peut être celle décrite dans la norme AFNOR NFT 90-101) est de 1030 mg d'oxygène par litre.

A. Traitement séparé de la phase réductrice.

La solution a tout d'abord été traitée dans les conditions non conformes à l'invention c'est-à-dire avec du peroxyde d'hydrogène, un mélange $O_3/H_2O_2$ sans rayonnement UV ou sous la seule action d'un rayonnement UV. Le traitement a ensuite été réalisé conformément à l'invention sous l'action combinée d'un rayonnement UV avec soit de l'ozone, soit du peroxyde d'hydrogène, soit un mélange ozone/peroxyde d'hydrogène.

Le traitement est réalisé dans un réacteur de type bac agité sur lequel est disposée une lampe UV délivrant une puissance de 150 W/h par litre de solution.

Les résultats sont consignés dans le tableau I ci-après où les conditions principales de traitement ont été reportées pour chaque essai.

Les quantités de réactif et temps de réactions indiqués correspondent au traitement de 0,7 litre de solution.

TABLEAU 1

| Essais | Non conformes à l'invention | | | Conformes à l'invention | | | |
|---|---|---|---|---|---|---|---|
| Oxydant (Quantité) | $H_2O_2$ (3,3 g) | $O_3$ (165 g) | $O_3$ (165g) puis après 15 min $H_2O_2$ (3,3 g) | - | $O_3$ (165 g) | $H_2O_2$ (3,3 g) | $O_3$ (165 g) $H_2O_2$ (3,3 g) |
| UV (puissance) | non | non | non | oui 4500 W | oui 1071 W | oui 2 360 W | oui 1 071 W |
| Temps de réaction | 20 h | 5 h | 6h30 | 20 h | 5h | 11 h | 5h |
| DCO finale (mg $O_2$) | - | 1 000 | 720 | 370 | 19 | < 10 | < 10 |
| Abattement DCO (%) | * | 3 | 30 | 64,1 | 98,2 | 99 | 99 |

* pas d'abattement de la DCO

Ces résultats montrent que la dégradation de l'acide ascorbique par les oxydants seuls ou par les rayons UV seuls n'est pas satisfaisante. Par contre dans chaque essai conforme à l'invention on obtient une dégradation presque quantitative de l'acide ascorbique de sorte que la demande chimique en oxygène est abaissée de plus de 98 %.

Par ailleurs, dans les conditions de l'invention, les résultats obtenus avec le peroxyde d'hydrogéne sont meilleurs que ceux obtenus avec l'ozone, ces résultats pouvant encore être améliorés avec l'ozone et le peroxyde d'hydrogène en combinaison.

B. Traitement du mélange des effluents

0,35 1 de la solution oxydante sont versées dans 0,35 1 de la solution réductrice. La précipitation de $MnO_2$ est évitée si l'on respecte ce sens de transfert et si ce transfert s'effectue suffisamment lentement pour avoir toujours un excès de réducteur autour des ions $MnO_4^-$ conduisant à la transformation de ces derniers en $Mn^{2+}$ et non en oxyde $MnO_2$.

La réaction produite est

$$4MnO_4^- + 12H^+ + C_6H_8O_6 \text{ --> } 4\,Mn^{2+} + 10\,H_2O + 6\,CO_2$$

L'excès de réducteur est traité selon l'invention par le peroxyde d'hydrogène sous rayonnement UV. On parvient à un abattement de la DCO jusqu'à 10 mg/l de $O_2$ en 18 heures pour une puissance UV consommée de 360 W, la quantité de peroxyde d'hydrogène engagée étant de 3 g.

**EXEMPLE 2 :** Traitement d'effluent de décontamination.

100 1 de la solution oxydante préparée à l'exemple 1 sont versés à un débit de 200 1/h dans 100 1 de la solution réductrice de l'exemple 1. Le mélange est traité en semi-continu dans un dispositif selon l'invention comprenant un bac de stockage contenant 200 1 d'effluent, une pompe de circulation, un dispositif d'injection de peroxyde d'hydrogène et deux réacteurs en série de 11 1 équipés chacun d'une lampe UV moyenne pression de 5 kW fournissant une puissance de environ 23 $W.h^{-1}/1$.

Le mélange des solutions est introduit à 25°C dans le bac de stockage et mis en circulation au moyen de la pompe à un débit de 500 1/h.

Le peroxyde d'hydrogène est injecté environ toutes les 50 minutes à raison de 2 à 3 moles de $H_2O_2$ par mole de COT en amont des réacteurs au moyen d'une pompe doseuse.

Au cours du traitement, la teneur en carbone organique total (COT), en carbone inorganique total (CIT) sont dosées périodiquement et on mesure la DCO et le pH de la solution. Les résultats du traitement sont indiqués dans le tableau 2 ci-après dans lequel chacune des - caractéristiques précitées est définie pour un volume de 1 1 du mélange d'effluents.

TABLEAU 2

| Temps de réaction | Quantité cumulée d'H₂O₂ consommé (mg) | pH | DCO (mg O₂) | Réduction de la DCO (%) | COT (mg C) | CIT (mg C) |
|---|---|---|---|---|---|---|
| 0 | 0 | 2,4 | 540 | 0 | 289 | 0,2 |
| 54 min | 248 | 2,82 | 490 | 12,3 | 193 | 0,5 |
| 1 h 46 | 531 | 3,53 | 244 | 56,8 | 87 | 1 |
| 2 h 31 | 952 | 5,11 | 36 | 87,6 | 26 | 70 |
| 3 h 20 | 1 321 | 5,5 | 12 | 95 | 9 | 44 |
| 4 h 09 | 1 804,2 | 5,7 | 8 | 98 | 5 | 48 |
| 4 h 57 | 1 897,7 | 6,03 | 3-10 | 98,6 | 4 | 41 |
| 5 h 44 | 1 924,9 | 6,18 | 0-2 | 99,6 | 3 | 28 |
| 6 h 30 | 1940,1 | 6,39 | 2-9 | 100 | 2,7 | 30 |

Au bout de 6 heures 30, l'abattement de la DCO est de 100 %, avec une consommation de 1,94 g de $H_2O_2$ par litre d'effluent et une consommation d'énergie de 168,2 W/l.

Les rendements de cette réaction sont satisfaisants dès 4 heures de traitement car les mesures de la DCO au-dessous de 30 mg/l sont en-dessous de la limite basse du domaine d'application de la méthode de dosage et présentent alors de fortes imprécisions.

Au cours du traitement, le pH de l'effluent reste acide, inférieur à 6 pendant les cinq premières heures et reste assez éloigné du pKa d'équilibre des carbonates en milieu aqueux. Le $CO_2$ formé est donc libéré sous forme gazeuse par la solution. La teneur en carbone inorganique total augmente au début du traitement mais finit par baisser jusqu'à une valeur tout à fait acceptable. La chute brutale de la teneur en carbone organique total à environ 2 heures correspond à l'augmentation de la teneur en carbone inorganique total, et indique que la décomposition de la matière organique produit du $CO_2$.

La description de l'invention a été faite plus particulièrement en regard de l'application des effluents de procédé de décontamination d'éléments de centrales nucléaires mais le procédé de l'invention convient tout aussi bien au traitement de tout autre effluent acide contenant des réducteurs et présentant les mêmes caractéristiques que les effluents de décontamination.

**Revendications**

1. Procédé de traitement d'un effluent aqueux acide issu de la décontamination d'un composant d'une centrale nucléaire, ledit effluent renfermant une charge organique comprenant un réducteur organique et des ions nitrates, caractérisé en ce qu'on introduit dans ledit effluent au moins un composé oxydant choisi parmi l'ozone et le peroxyde d'hydrogène, qu'on soumet l'effluent dans lequel le composé oxydant a été introduit à un rayonnement ultraviolet et qu'on convertit ainsi la totalité de la charge organique en eau et en dioxyde de carbone, ainsi qu'éventuellement en au moins un oxyde d'un élément chimique présent dans la charge organique tout en neutralisant ledit effluent.

2. Procédé selon la revendication 1, caractérisé en ce que la charge organique de l'effluent contient de l'acide ascorbique.

3. Procédé selon l'une quelconque des revendications précédentes, caractérisé en ce que le rayonnement UV est fourni par des lampes ou par un faisceau laser excimère.

4. Procédé selon l'une quelconque des revendications précédentes, caractérisé en ce que la gamme des longueurs d'onde du rayonnement ultra-violet est de 200 à 600 nm.

5. Procédé selon l'une quelconque des revendications précédentes, caractérisé en ce que l'on utilise 0,4 à 3 g de peroxyde d'hydrogène par gramme de charge organique initiale.

6. Procédé selon l'une quelconque des revendications précédentes, caractérisé en ce que l'on utilise 10 à 200 g d'ozone par gramme de charge organique initiale.

7. Procédé selon l'une quelconque des revendications précédentes, caractérisé en ce que la puissance apportée par le rayonnement UV au cours du traitement est de 10 à 5 000 W, et de préférence inférieure à 1 000 W par gramme de charge organique initiale.

8. Procédé selon l'une quelconque des revendications précédentes, caractérisé en ce que le pH de l'effluent au cours du traitement est maintenu inférieur à 6,3.

9. Procédé selon l'une quelconque des revendications précédentes, caractérisé en ce que l'effluent est soumis au rayonnement UV pendant une durée inférieure à 24 heures, et de préférence de 3 à 12 heures.

10. Procédé selon l'une quelconque des revendications précédentes, caractérisé en ce que la température initiale de l'effluent est de 15 à 60°C et de préférence de 20 à 35°C.

11. Procédé de traitement d'effluents issus d'opérations de décontamination d'un composant d'une centrale nucléaire produisant différents types d'effluents notamment d'attaque oxydante, d'attaque réductrice ou de rinçage, caractérisé en ce que chaque effluent contenant une charge organique est traité séparément suivant un procédé selon l'une quelconque des revendications précédentes, puis les effluents ainsi traités sont réunis pour être évacués, éventuellement après avoir été déminéralisés.

12. Procédé de traitement d'effluents issus d'un procédé de décontamination d'un composant d'une centrale nucléaire comprenant une étape d'attaque oxydante et une étape d'attaque réductrice, caractérisé en ce que l'effluent d'attaque oxydante est ajouté à l'effluent d'attaque réductrice, puis le mélange d'effluents résultant est traité selon l'une quelconque des revendications 1 à 10, avant d'être évacué, éventuellement après avoir été déminéralisé.

**13.** Dispositif pour la mise en oeuvre d'un procédé de traitement selon l'une quelconque des revendications précédentes, comprenant une boucle de circulation de l'effluent liquide, caractérisé en ce que la boucle de circulation comprend un bac (1) de stockage d'effluent auquel sont éventuellement associés des moyens de mélange, des moyens (2) de circulation de l'effluent dans ladite boucle, des moyens (3) d'injection d'un réactif liquide ou gazeux dans ladite boucle alimentés en peroxyde d'hydrogène ou en ozone, et au moins une source (4) de rayonnement ultraviolet devant laquelle circule l'effluent.

EP 0 781 728 A1

Office européen
des brevets

**RAPPORT DE RECHERCHE EUROPEENNE**

Numero de la demande
EP 96 40 2907

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 139 679 A (BINGHAM Y.K. PAN ET AL)<br>* revendications 1-18 *<br>--- | | C02F1/32<br>C02F1/78<br>C02F1/72 |
| A | EP 0 671 363 A (NEC ENVIRONMENT)<br>* page 3, ligne 7-8; revendications 1-9 *<br>----- | | |

DOMAINES TECHNIQUES
RECHERCHES (Int.Cl.6)

C02F

Le présent rapport a été établi pour toutes les revendications

| Lieu de la recherche | Date d'achèvement de la recherche | Examinateur |
|---|---|---|
| LA HAYE | 26 Mars 1997 | Fouquier, J-P |